# EUROPÄISCHE PATENTANMELDUNG

(11) **EP 0 543 256 A1**
(43) Veröffentlichungstag der Anmeldung: **26.05.1993**
(21) Anmeldenummer: 92119205.0
(22) Anmeldetag: 10.11.1992
(51) Int. Cl.: B65G 17/20, A22B 7/00, B65G 21/22

(54) **Hängeförderer für Schlachthöfe oder dergleichen**

(30) Priorität: 22.11.1991 DE 4138467
(71) Anmelder: Banss Maschinenfabrik GmbH & Co. KG, D-35216 Biedenkopf (DE)
(72) Erfinder: Donges, Manfred, W-3563 Dautphetal-Silberg (DE)
(74) Vertreter: Klunker . Schmitt-Nilson . Hirsch

(57) **Zusammenfassung**

1. Hängeförderer für Schlachthöfe, Schlachttierzerlegebetriebe oder Fleischkühlräume, aufweisend:
   (a) eine antreibbare, endlose Förderkette (2);
   (b) Mitnehmerwagen (10), die voneinander beabstandet an der Förderkette (2) befestigt sind;
   (c) eine Laufschiene (26) zum Abstützen der sich entlang der Laufschiene (26) bewegenden Mitnehmerwagen (10); und
   (d) Mitnehmer (36), die jeweils nach unten ragend an einem Mitnehmerwagen (10) befestigt sind, zum fördernden Mitnehmen von Haken (58) für Schlachttiere oder Schlachttierteile,
   **dadurch gekennzeichnet,**
   (e) daß die Laufschiene (26) einen geschlossenen Bodenbereich (28) und an jeder Seite einen hochstehenden Wandbereich (30) aufweist; und
   (f) daß die Mitnehmer (36) jeweils einen Bereich (38) in Form eines seitlich offenen U aufweisen, der seitlich um die Laufschiene (26) herumführt.

## Beschreibung

Die Erfindung bezieht sich auf einen Hängeförderer für Schlachthöfe, Schlachttierzerlegebetriebe oder Fleischkühlräume, aufweisend:
(a) eine antreibbare, endlose Förderkette;
(b) Mitnehmerwagen, die voneinander beabstandet an der Förderkette befestigt sind;
(c) eine Laufschiene zum Abstützen der sich entlang der Laufschiene bewegenden Mitnehmerwagen; und
(d) Mitnehmer, die jeweils nach unten ragend an einem Mitnehmerwagen befestigt sind, zum fördernden Mitnehmen von Haken für Schlachttiere oder Schlachttierteile.

Hängeförderer dieser Art sind in großem Umfang in Schlachthöfen oder dergleichen in Betrieb. Sie sind herkömmlicherweise mit einer Laufschiene ausgebildet, die im wesentlichen aus zwei U-Stahlprofilen besteht, die mit ihren offenen Seiten zueinanderweisend unter Freilassung eines oberen Längsschlitzes und eines unteren Längsschlitzes angeordnet sind. Die Mitnehmerwagen sind mittels Rollenpaaren dadurch auf der Laufschiene abgestützt, daß die jeweils linke Rolle auf der Oberseite des unteren, waagerechten Flanschs des linken U-Profils abrollt und jeweils die rechte Rolle analog auf dem unteren waagerechten Flansch des rechten U-Profils abrollt. Die Mitnehmer durchsetzen den unteren Schlitz der Laufschiene.

Die Förderketten derartiger Hängeförderer müssen immer gut geschmiert gehalten werden, um Reibung und Verschleiß der Kettenglieder untereinander sowie beim Zusammenwirken mit antreibenden Kettenrädern oder umlenkenden Kettenrädern möglichst gering zu halten. Es ist unvermeidlich, daß infolgedessen von Zeit zu Zeit Schmierfett oder mit Schmierfett verunreinigtes Wasser von der Förderkette durch den unteren Schlitz der Laufschiene nach unten tropft und dort Schlachttiere bzw. Schlachttierteile verunreinigt, gefährdende Rutschstellen auf dem Boden bildet oder auf Arbeitspersonen gelangt.

Der Erfindung liegt die Aufgabe zugrunde, einen Hängeförderer der eingangs genannten Art zu schaffen, der so konstruiert ist, daß das Herabtropfen von Schmierstoff verhindert ist.

Zur Lösung dieser Aufgabe ist der Hängeförderer erfindungsgemäß dadurch gekennzeichnet,
(e) daß die Laufschiene einen geschlossenen Bodenbereich und an jeder Seite einen hochstehenden Wandbereich aufweist;
(f) und daß die Mitnehmer jeweils einen Bereich in Form eines seitlich offenen U aufweisen, der seitlich um die Laufschiene herumführt.

Von der Förderkette herabfallende Verunreinigungen gelangen somit auf den geschlossenen Bodenbereich der Laufschiene und können von dort nicht weiter nach unten tropfen. Herstellungstechnisch und unter dem Gesichtspunkt der Tragfahigkeit ist die erfindungsgemäße Laufschiene eher günstiger als die beschriebene, bekannte Laufschiene, weil nicht zwei gesonderte Stahlprofile an zahlreichen, beabstandeten Stellen miteinander verbunden werden müssen und weil im unteren Bereich der Laufschiene kein die Tragfähigkeit reduzierender Längsschlitz vorhanden ist.

Es wird darauf hingewiesen, daß die Mitnehmerwagen nicht zwingend mittels Rollen auf der Laufschiene abgestützt sein müssen, sondern beispielsweise auch gleitend auf der Laufschiene abgestützt sein können, wiewohl ersteres im Interesse einer Verringerung der Reibung bevorzugt ist. Im Fall der Abstützung der Mitnehmerwagen mittels Rollen bestehen die Rollen vorzugsweise aus Kunststoff.

Im Interesse einer einfachen Herstellung kann die Laufschiene mit einem nach oben offenen U-Stahlprofil als Hauptbestandteil aufgebaut sein. Um ein ungewolltes Herauskommen der Mitnehmerwagen nach oben aus der Laufschiene zu verhindern, kann diese mindestens bereichsweise an jeder Seite einen von einem Wandbereich in Richtung zur Mitte vorstehenden Deckbereich aufweisen, wobei zwischen den Innenrändern der beiden Deckbereiche ein Schlitz vorhanden ist, der von den Mitnehmerwagen durchsetzt ist. Diese Konstruktion empfiehlt sich ganz besonders in Bereichen der Laufschiene, wo diese - von oben betrachtet - konkav gekrümmt verläuft. Die beschriebenen Deckbereiche können einstückig mit den zugeordneten Wandbereichen sein oder an diesen befestigt, beispielsweise angeschweißt, sein.

Eine als besonders einfach bevorzugte Konstruktion der Mitnehmerwagen besteht darin, daß diese jeweils mit einem im wesentlichen plattenförmigen Hauptteil ausgebildet sind, das oben an einem liegenden Glied der Förderkette befestigt ist und an dem unten mindestens ein Rollenpaar gelagert ist.

Für die Mitnehmer ist als besonders einfache Konstruktion bevorzugt, daS sie jeweils ein oberes Teil, das aus U-förmig gebogenem Flachstahl besteht, und ein daran befestigtes unteres Teil aufweisen, das aus Flachstahl besteht. Das obere Teil kann an den betreffenden Mitnehmerwagen angeschraubt sein, und das untere Teil kann an das obere Teil angeschraubt sein.

Die Mitnehmer können jeweils einen hakenartig ausgebildeten, unteren Bereich zum Untergreifen der Haken für Schlachttiere oder Schlachttierteile aufweisen. In diesem Fall können diese Haken an den Mitnehmern und damit den Mitnehmerwagen hängend gefördert werden. Alternativ können die Mitnehmer jeweils einen unteren Bereich aufweisen, der für schiebenden Kontakt mit den Haken für Schlachttiere oder Schlachttierteile ausgebildet ist. In diesem Fall werden die Haken, die an einer Förderbahn, üblicherweise einer Rohrbahn, hängen, durch schiebenden Kontakt mit den Mitnehmern fördernd bewegt. Dabei kann es sich um Rutschhaken oder Rollhaken handeln.

Vorzugsweise ist die Laufschiene mittels seitlich offener, U-förmiger Konsolen hängend an Tragteilen befestigt. Bei den Tragteilen handelt es sich insbesondere um Teile einer Tragkonstruktion, die ihrerseits an der Decke des Schlachthofs oder dergleichen befestigt ist, oder auch um die Deckenkonstruktion selbst. Es versteht sich, daS die Konsolen auf derjenigen Seite um die Laufschiene herumführen, die der Seite, an der die Mitnehmer herumführen, entgegengesetzt ist.

Die Erfindung und Ausgestaltungen der Erfindung wird nachfolgend anhand eines zeichnerisch dargestellten Ausführungsbeispiels noch näher erläutert. Es zeigt:
- **Fig. 1**: einen Hängeförderer im Querschnitt;
- **Fig. 2**: den Hängeförderer von **Fig. 1** in teilweise geschnittener Seitenansicht gemäß II-II in **Fig. 1**.

Der gezeichnete Hängeförderer weist eine Förderkette 2 auf, die als Steckkette aus durch Bolzen 4 miteinander verbundenen, abwechselnd liegenden Gliedern 6 und stehenden Gliedern 8 ausgebildet ist. Es handelt sich um eine endlose Förderkette 6, die über mindestens ein nicht dargestelltes Antriebs-Kettenrad und über mindestens ein Ketten-Umlenkrad geführt ist.

Mitnehmerwagen 10 sind in gegenseitigem Abstand (der normalerweise mehrere Kettenglieder beträgt) jeweils an einem liegenden Kettenglied 6 befestigt, und zwar mittels einer oberen Befestigungslasche 12, wobei Befestigungsschrauben 14 von oben nach unten durch die Befestigungslasche 12 und das betreffende Kettenglied 6 hindurch in den betreffenden Mitnehmerwagen 10 eingeschraubt sind.

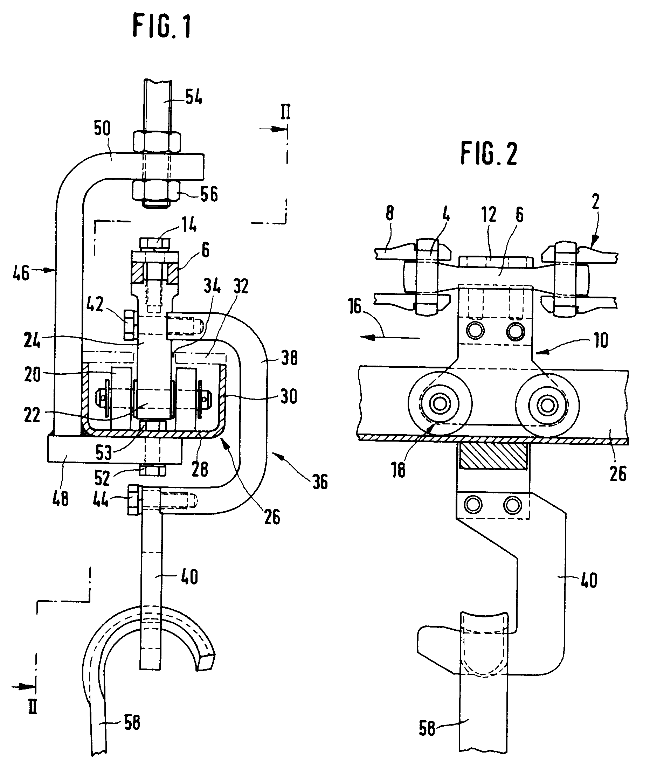

Die Bewegungsrichtung der Förderkette 2 und des gezeichneten Mitnehmerwagens 10 ist in **Fig. 2** mit 16 bezeichnet. Jeder Mitnehmerwagen 10 besitzt ein in Bewegungsrichtung vorderes und ein in Bewegungsrichtung hinteres Rollenpaar 18, bestehend jeweils aus zwei Rollen 20, die drehbar auf einer stationären Achse 22 gelagert sind, die in eine Querbohrung des Mitnehmerwagens 10 eingesetzt ist. Die Rollen 20 bestehen aus einem Kunststoff hoher Belastbarkeit. Der beschriebene Hauptteil 24 des gezeichneten Mitnehmerwagens 10 ist - von der Achse 22 und den Rollen 20 abgesehen - im wesentlichen plattenförmig.

Die Mitnehmerwagen 10 sind mittels der Rollen 20 bewegbar auf einer Laufschiene 26 abgestützt, die hauptsächlich aus einem - im Querschnitt der **Fig. 1** betrachtet - oben offenen U-Stahlprofil besteht, so daß ein geschlossener Bodenbereich 28 und an jeder Seite ein hochstehender Wandbereich 30 der Laufschiene 26 gebildet sind. Die Laufschiene 26 kann mindestens bereichsweise Deckbereiche 32 aufweisen, die jeweils an einem zugehörigen Wandbereich 30 angeschweißt sind, wobei zwischen den Innenrändern der beiden Deckbereiche 32 ein Schlitz 34 frei bleibt, durch den hindurch der Hauptteil 24 des betreffenden Mitnehmerwagens 10 nach oben herausragt.

An dem gezeichneten Mitnehmerwagen 10 ist ein Mitnehmer 36 befestigt. Der Mitnehmer 36 besteht aus einem im Querschnitt der **Fig. 1** U-förmigen, oberen Teil 38 und einem in der Seitenansicht der **Fig. 2** hakenartigen, unteren Teil 40 aus Flachstahl oder Flachaluminium oder Aluminiumguß. Der obere Teil 38 besteht aus kräftigem, U-förmig gebogenem Flachstahl oder Aluminiumguß. Der obere Teil 38 ist mittels einer in Förderrichtung 16 vorderen und einer in Förderrichtung 16 hinteren Schraube 42 an dem Hauptteil 24 des Mitnehmerwagens 10 festgeschraubt, und zwar oberhalb des Bereichs der Laufschiene 26. Der obere Teil 38 des Mitnehmers 36 führt im Querschnitt der **Fig. 1** rechts um die Laufschiene 26 herum. Unterhalb der Laufschiene 26 ist der untere Teil 40 mittels einer in Förderrichtung 16 vorderen Schraube 44 und einer in Förderrichtung 16 hinteren Schraube 44 an dem oberen Teil 38 befestigt. Alternativ können der obere Teil 38 und der untere Teil 40 zu einem gemeinsamen, einstückigen Teil vereinigt sein.

Zur Halterung der Laufschiene 26 sind U-förmige Konsolen 46 in unter statischen Gesichtspunkten geeignet gewählten Abständen vorgesehen. Die Konsolen 46 führen im Querschnitt der **Fig. 1** linksseitig um die Laufschiene 26 herum, wobei für den unteren waagerechten Schenkel 48 der Konsole 46 Platz zwischen der Laufschiene 26 und dem unteren Schenkel des oberen Teils 38 des Mitnehmers 36 ist und wobei der obere waagerechte Schenkel 50 der Konsole 46 oberhalb der Förderkette 2 ist. Beim dargestellten Ausführungsbeispiel besteht die Konsole 46 aus einem L-förmig gebogenen Flachstahl, an den der untere Schenkel 48 angeschweißt ist. Alternativ kann die Konsole 46 einschließlich des unteren Schenkels 48 aus einem Stück gebogen sein. Die Befestigung der Laufschiene 26 an der betreffenden Konsole 46 geschieht durch eine von unten nach oben eingeschraubte Schraube 52.

Ferner erkennt man eine mittige Führungsschiene 53 aus Kunststoff oder Metall, die auf der Oberseite des Bodenbereichs 28 der Laufschiene 26 befestigt ist, um die Rollen 20 des Mitnehmerwagens 10 zu führen. Die Führungsschiene 53 kann dadurch an der Laufschiene 26 befestigt sein, daß die Schrauben 52 in Gewindebohrungen der Führungsschiene 53 eingeschraubt sind. Häufig ist es ausreichend, die Führungsschiene nur auf Teilbereichen der Länge der Laufschiene 26, d. h. abschnittsweise, vorzusehen, zum Beispiel in in Draufsicht gekrümmten Teilbereichen.

Die gezeichnete Konsole 46 hängt ihrerseits an einer vertikalen Tragstange 54, an der sie mit einer oberen und einer unteren Mutter 56 befestigt ist. Die Tragstange 54 ist Teil einer beispielsweise an der Schlachthofdecke befestigten Tragkonstruktion für den Hängeförderer. Die Laufschiene 26 kann alternativ in anderer Weise im Schlachthof befestigt sein, beispielsweise auf von einer Schlachthofwand seitlich vorragenden Trägern ruhen.

Die Längsmittelebene des Hängeförderers ist mit 58 bezeichnet. Die Mittelebene der Tragstange 54, die Mittelebene des Hauptteils 24 des Mitnehmerwagens 10 und die Mittelebene des unteren Teils 40 des Mitnehmers 36 fallen mit der Längsmittelebene 56 des Hängeförderers zusammen.

Wenn der Mitnehmer 36, wie gezeichnet, in seinem unteren Bereich hakenartig ausgebildet ist, kann er Haken 58 für Schlachttiere oder Schlachttierteile untergreifen und freihängend fördern. Alternativ kann man den unteren Bereich des Mitnehmers 36 so ausbilden, daß er an der Hakenrückseite im oberen Hakenbereich schiebend angreift und den betreffenden Haken 58 gleitend oder rollend auf einer Förderbahn weiterschiebt.

Die Laufschiene 26 besteht vorzugsweise aus verzinktem Stahl oder aus nichtrostendem Stahl.

## Patentansprüche

1. Hängeförderer für Schlachthöfe, Schlachttierzerlegebetriebe oder Fleischkühlräume, aufweisend:
(a) eine antreibbare, endlose Förderkette (2);
(b) Mitnehmerwagen (10), die voneinander beabstandet an der Förderkette (2) befestigt sind;
(c) eine Laufschiene (26) zum Abstützen der sich entlang der Laufschiene (26) bewegenden Mitnehmerwagen (10); und
(d) Mitnehmer (36), die jeweils nach unten ragend an einem Mitnehmerwagen (10) befestigt sind, zum fördernden Mitnehmen von Haken (58) für Schlachttiere oder Schlachttierteile,
**dadurch gekennzeichnet,**
(e) daß die Laufschiene (26) einen geschlossenen Bodenbereich (28) und an jeder Seite einen hochstehenden Wandbereich (30) aufweist; und
(f) daß die Mitnehmer (36) jeweils einen Bereich (38) in Form eines seitlich offenen U aufweisen, der seitlich um die Laufschiene (26) herumführt.

2. Hängeförderer nach Anspruch 1,
**dadurch gekennzeichnet,**
daß die Laufschiene (26) mit einem nach oben offenen U-Stahlprofil aufgebaut ist.

3. Hängeförderer nach Anspruch 1 oder 2,
**dadurch gekennzeichnet,**
daß die Laufschiene (26) an jeder Seite einen von einem Wandbereich (30) in Richtung zur Mitte vorstehenden Deckbereich (32) aufweist, wobei zwischen den Innenrändern der beiden Deckbereiche (32) ein Schlitz (34) vorhanden ist, der von den Mitnehmerwagen (10) durchsetzt ist.

4. Hängeförderer nach Anspruch 3,
**dadurch gekennzeichnet,**
daß die Deckbereiche (32) von an den Wandbereichen befestigten Bauteilen gebildet sind.

5. Hängeförderer nach mindestens einem der Ansprüche 1 bis 4,
**dadurch gekennzeichnet,**
daß die Mitnehmerwagen (10) jeweils mit einem im wesentlichen plattenförmigen Hauptteil (24) ausgebildet sind, das oben an einem liegenden Glied (6) der Förderkette (2) befestigt ist und an dem unten mindestens ein Rollenpaar (18) gelagert ist.

6. Hängeförderer nach mindestens einem der Ansprüche 1 bis 5,
**dadurch gekennzeichnet,**
daß die Mitnehmer (36) jeweils ein oberes Teil (38), das aus U-förmig gebogenem Flachstahl oder Aluminiumguß besteht, und ein daran befestigtes unteres Teil (40) aufweisen, das aus Flachstahl oder Aluminiumguß besteht.

7. Hängeförderer nach mindestens einem der Ansprüche 1 bis 6,
**dadurch gekennzeichnet,**
daß die Mitnehmer (36) jeweils einen hakenartig ausgebildeten, unteren Bereich (40) zum Untergreifen der Haken (58) für Schlachttiere oder Schlachttierteile aufweisen.

8. Hängeförderer nach mindestens einem der Ansprüche 1 bis 6,
**dadurch gekennzeichnet,**
daß die Mitnehmer (36) jeweils einen unteren Bereich aufweisen, der für schiebenden Kontakt mit den Haken (58) für Schlachttiere oder Schlachttierteile ausgebildet ist.

9. Hängeförderer nach mindestens einem der Ansprüche 1 bis 8,
**dadurch gekennzeichnet,**
daß die Laufschiene (26) mittels seitlich offener, U-förmiger Konsolen (46) hängend an Tragteilen (54) befestigt ist.

10. Hängeförderer nach mindestens einem der Ansprüche 1 bis 9,
**dadurch gekennzeichnet,**
daß auf dem Bodenbereich (28) der Laufschiene (26) mindestens bereichsweise eine Führungsschiene vorgesehen ist.
